(19) 

Europäisches
Patentamt
European
Patent Office
Office européen
des brevets

(11) **EP 3 624 332 B1**

(12) **EUROPEAN PATENT SPECIFICATION**

(45) Date of publication and mention
of the grant of the patent:
**12.05.2021 Bulletin 2021/19**

(51) Int Cl.:
***H02S 50/00*** *(2014.01)*

(21) Application number: **18194946.2**

(22) Date of filing: **17.09.2018**

(54) **OPERATIONAL LIFETIME PREDICTION OF PHOTOVOLTAIC DEVICES**

BETRIEBSLEBENSDAUERVORHERSAGE VON FOTOVOLTAISCHEN VORRICHTUNGEN

PRÉDICTION DE LA DURÉE DE VIE OPÉRATIONNELLE DE DISPOSITIFS PHOTOVOLTAÏQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.03.2020 Bulletin 2020/12**

(73) Proprietors:
- **IMEC vzw
3001 Leuven (BE)**
- **Katholieke Universiteit Leuven
KU Leuven Research & Development
3000 Leuven (BE)**

(72) Inventors:
- **BASTOS, Joao
3001 Leuven (BE)**
- **AERNOUTS, Tom
3001 Leuven (BE)**
- **GEHLHAAR, Robert
3001 Leuven (BE)**

(74) Representative: **DenK iP bv
Leuvensesteenweg 203
3190 Boortmeerbeek (BE)**

(56) References cited:
**US-A1- 2010 224 227     US-A1- 2018 017 679**

## Description

### Field of the invention

The invention relates to the field of photovoltaics, and particularly to the field of thin-film photovoltaics. More specifically it relates to means and methods for estimating the lifetime of a thin-film photovoltaic cell taking time series of data representative of environmental conditions into account The document US 2010/224227 A1 is a relevant prior art.

### Background of the invention

Various materials may be suitable as alternative to the materials used in mainstream thin-film photovoltaic cell technology, such as alternatives to materials used in copper-indium-gallium-selenide cells (CIGS), cadmium telluride cells or amorphous silicon cells. Alternative materials for use as absorber layer may include kesterites, organic semiconductors, dye-sensitized or quantum-dot-based materials and hybrid or fully inorganic perovskites. While several of these materials have shown promising initial power conversion efficiency (PCE), it may be difficult to predict what the operational lifetime of such emerging technology would be when deployed in the field. Even though lab-based (accelerated) lifetime testing can be performed, this does not necessarily extrapolate to actual lifetime of installations when field data are not considered. For example, for relatively immature technologies, the available data regarding lifetime, both in indoor and outdoor conditions, is limited, and it is unclear how the lifetime can be improved.

Perovskite photovoltaic devices, as an example of one such relatively immature technology, may offer an opportunity for innovative light harvesting in the near future. This technology may be advantageously inexpensive in view of low material and processing costs, and may enable new geometries that are unattainable with traditional solar cells.

### Summary of the invention

It is an object of embodiments of the present invention to provide means and methods for estimating the lifetime of a thin-film photovoltaic cell taking a time series of data representative of environmental conditions, such as weather data, into account.

It is an advantage of embodiments of the present invention that the operational lifetime of emerging thin-film photovoltaic technologies, such as perovskite photovoltaic devices, under realistic environmental conditions can be predicted.

It is an advantage of embodiments of the present invention that a quick estimation of the lifetime can be achieved.

It is an advantage of embodiments of the present invention that simulations for estimating the lifetime of a photovoltaic cell and the model for producing such simulations can be used to identify device features that can be improved to increase the lifetime of a photovoltaic device.

It is an advantage of embodiments of the present invention that weather data and parameters characterizing a thin-film photovoltaic cell can be taken into account in a dynamic degradation model to calculate the lifetime of the cell.

It is an advantage of embodiments of the present invention that a fast estimation of the lifetime of a photovoltaic device can be obtained without requiring actual outdoor testing of the device. Furthermore, it is an advantage that lifetime estimates can be obtained much faster than by actual measurements of the lifetime of the device in an outdoor environment.

It is an advantage of embodiments of the present invention that a lifetime estimation can be obtained for a photovoltaic device as dependent on a specific location, such that, for example the impact of the location on the expected lifetime can be studied. Therefore, embodiments of the present invention may also offer a valuable tool for evaluating the viability of specific markets for a specific photovoltaic technology.

The above objective is accomplished by a method and device according to the present invention.

In a first aspect, the present invention relates to a method for estimating the operational lifetime of a thin-film photovoltaic cell. The method comprises obtaining a time series of data which are indicative of environmental conditions as dependent on time and estimating the efficiency of the thin-film photovoltaic cell at a plurality of points in time. This estimating comprises, for each point of the points in time, determining a device temperature based on an efficiency estimate and on data of the time series that are representative for that point in time and updating the efficiency estimate by estimating a degradation of the thin-film photovoltaic cell as function of the device temperature, e.g. as function of the device temperature and irradiance. The method comprises outputting at least one value indicative of the operational lifetime based on the plurality of efficiency estimates obtained for the plurality of points in time.

In a method in accordance with embodiments of the present invention, the step of updating the efficiency estimate may comprise using an equation $f(T_{device}, t)$ that expresses the efficiency of the photovoltaic cell over a time $t$ and at a constant device temperature $T_{device}$ in accordance with a fixed temperature degradation model.

In a method in accordance with embodiments of the present invention, the equation may be an equation for the power conversion efficiency, or a normalized power conversion efficiency, that comprises a multiplication of a factor expressing the short-circuit current density, a factor expressing the open-circuit voltage and a factor expressing the fill factor (of the photovoltaic cell).

In a method in accordance with embodiments of the present invention, at least one of the factor expressing the short-circuit current density, the factor expressing the open-circuit voltage and the factor expressing the fill factor may comprise a function of the form $A_0 e^{-k \cdot t^n}$ and/or a function of the form $A_0[_1- (k \cdot t)^n]$ and/or a sum of a plurality of such functions of the form $A_0 e^{-k \cdot t^n}$ and/or $A_0[1- (k \cdot t)^n]$. $A_0$, $k$ and n represent respectively a multiplicative factor, a degradation rate and an exponent.

In a method in accordance with embodiments of the present invention, the degradation rate may be dependent on the device temperature in accordance with the Arrhenius equation $k = B_0 e^{E_a/k_B T}$, wherein $B_0$ represents a multiplicative factor, $E_a$ represents an activation energy, $k_B$ is the Boltzmann constant and T represents the device temperature.

In a method in accordance with embodiments of the present invention, the factor expressing the short-circuit current density may comprise a function of the form $A_0 e^{-k \cdot t^n}$, wherein the factor expressing the open-circuit voltage comprises a sum of two functions of the form $A_0 e^{-k \cdot t^n}$ and one function of the form of the $A_0[_1- (k \cdot t)^n]$, and wherein the factor expressing the fill factor comprises a function of the form $A_0 e^{-k \cdot t^n}$.

A method in accordance with embodiments of the present invention may comprise determining parameters of the equation for use in the step of updating the efficiency estimate. The step of determining the parameters may comprise storing a plurality of the thin-film photovoltaic cells at a plurality of constant and predetermined temperatures and measuring and/or determining characteristics of the plurality of photovoltaic cells at a plurality of points in time during their storage at constant temperature.

In a method in accordance with embodiments of the present invention, the measured and/or determined characteristics may comprise a short-circuit current density, an open-circuit voltage and/or a fill factor.

In a method in accordance with embodiments of the present invention, the step of updating may comprise estimating a reduction of the efficiency of the photovoltaic cell by calculating the time derivative of said equation.

A method in accordance with embodiments of the present invention may be adapted for estimating the operational lifetime of a thin-film photovoltaic cell comprising a absorber layer that comprises a perovskite material.

In a method in accordance with embodiments of the present invention, the perovskite material may comprise methyl ammonium lead iodide.

In a method in accordance with embodiments of the present invention, obtaining the time series may comprise obtaining weather data indicative of a temporal evolution of weather conditions. The time series may comprise, for each time index of the time series, at least a value indicative of an ambient air temperature and a value indicative of an insolation.

In a method in accordance with embodiments of the present invention, determining the device temperature may comprise calculating the device temperature based on an air temperature, an insolation and the current estimate of the efficiency.

In a method in accordance with embodiments of the present invention, calculating of the device temperature may be performed in accordance with the equation $T_{dev} = \left( T_{air}^4 + \frac{1-PCE}{2\sigma_B} \cdot Irradiance \right)^{\frac{1}{4}}$, in which $T_{dev}$ refers to the device temperature, $T_{air}$ refers to the air temperature and *Irradiance* to the insolation.

In a method in accordance with embodiments of the present invention, the steps of obtaining and estimating may be repeated for a plurality of time series that are indicative of environmental conditions as dependent on time for a corresponding plurality of locations.

In a second aspect, the present invention relates to a computer-program product for performing a method in accordance with embodiments of the first aspect of the present invention when executed, e.g. executed by a computing device.

In a third aspect, the present invention relates to a device for estimating the operational lifetime of a thin-film photovoltaic cell. The device comprises an input for receiving a time series of data that are indicative of environmental conditions as dependent on time, a processor for estimating the efficiency of the thin-film photovoltaic cell at a plurality of points in time and an output for outputting at least one value indicative of the operational lifetime based on the plurality of efficiency estimates obtained for the plurality of points in time. The estimation comprises, for each point of the points in time, determining a device temperature based on an efficiency estimate and on data of the time series that are representative for that point in time and updating the efficiency estimate by estimating a degradation of the thin-film photovoltaic cell as function of the device temperature.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from, and elucidated with, reference to the embodiment(s) described hereinafter.

## Brief description of the drawings

FIG 1 shows an exemplary method in accordance with embodiments of the present invention.

FIG 2 shows an exemplary method in accordance with embodiments of the present invention.

FIG 3 shows an exemplary curve of the device temperature as function of the air temperature for illustrating embodiments of the present invention.

FIG 4 shows an exemplary curve of the device temperature as function of the irradiance for illustrating embodiments of the present invention.

FIG 5 shows schematically a layer stack of a perovskite solar cell, for illustrating embodiments of the present invention.

FIG 6 shows photographs of perovskite solar cells, for illustrating embodiments of the present invention.

FIG 7 shows an evolution of the device parameters Jsc, Voc and FF, as well as the power conversion efficiency PCE, over time for devices stored at constant temperature, for illustrating embodiments of the present invention.

FIG 8 shows estimated device temperatures as function of time, taking meteorological data and the estimated efficiency as function of time into account, in accordance with embodiments of the present invention.

FIG 9 shows an estimated efficiency as function of time, in accordance with embodiments of the present invention.

FIG 10 illustrates a faster decrease of efficiency over time for devices with spiro-MeOTAD than for devices with PTAA, relating to an example for illustrating embodiments of the present invention.

FIG 11 illustrates a comparision of changes in fill factor over time for devices with spiro-MeOTAD and for devices with PTAA, relating to an example for illustrating embodiments of the present invention.

FIG 12 shows a plot of $1/(k_B T)$ vs $\log(k_{JMAK})$, from which an activation energy and attempt rate can be extracted, relating to an example for illustrating embodiments of the present invention.

FIG 13 shows a comparison of the open-circuit voltage of air-exposed MAPI devices and not air-exposed MAPI devices, relating to an example for illustrating embodiments of the present invention.

FIG 14 shows fitted curves with an exponential decay and a fixed asymptote of the initial open-circuit voltage decrease caused by oxygen desorption, relating to an example for illustrating embodiments of the present invention.

FIG 15 shows a plot of $1/(k_B T)$ vs $\log(k_{JMAK})$, from which an activation energy and attempt rate can be extracted, based on the fitted curves of FIG 14, relating to an example for illustrating embodiments of the present invention.

FIG 16 shows a comparison between experimental values (solid lines) and equation derived values (dashed lines) for describing the evolution in time of the open-circuit voltage, relating to an example for illustrating embodiments of the present invention.

FIG 17 illustrates the open-circuit voltage values after removal of the exponential fit in FIG 14, relating to an example for illustrating embodiments of the present invention.

FIG 18 illustrates the open-circuit voltage recovery, associated with $PbI_2$ passivation of MAPI, as a fitted decay as a function of β, in an example for illustrating embodiments of the present invention.

FIG 19 illustrates an equation for describing the open-circuit voltage recovery, in an example for illustrating embodiments of the present invention.

FIG 20 shows a dependence of the open-circuit voltage decay on the short-circuit current, in an example for illustrating embodiments of the present invention.

FIG 21 illustrates an equation for describing a further open-circuit voltage decay related to a decrease of the short-circuit current, in an example for illustrating embodiments of the present invention.

FIG 22 illustrates an equation for describing the evolution over time of the fill factor, in an example for illustrating embodiments of the present invention.

FIG 23 illustrates a good agreement between experimental efficiency (PCE) values (solid lines) and the values obtained by fitted equations (dashed lines), for devices stored at 23 °C, 50 °C, 63 °C and 85 °C, in an example for illustrating embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

## Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, the present invention relates to a method, e.g. a computerimplemented method, for estimating the operational lifetime of a thin-film photovoltaic cell. The method comprises obtaining a time series of data indicative of environmental conditions as dependent on time. The method comprises estimating the efficiency of the thin-film photovoltaic cell at a plurality of points in time. For each point in time, estimating the efficiency comprises determining a device temperature based on an efficiency estimate and on data of the time series that are representative for that point in time. Estimating the efficiency further comprises, for each point in time, updating the efficiency estimate by estimating a degradation of the thin-film photovoltaic cell as function of the device temperature and solar irradiance.

The method also comprises outputting at least one value indicative of the operational lifetime based on the plurality of efficiency estimates obtained for the plurality of points in time.

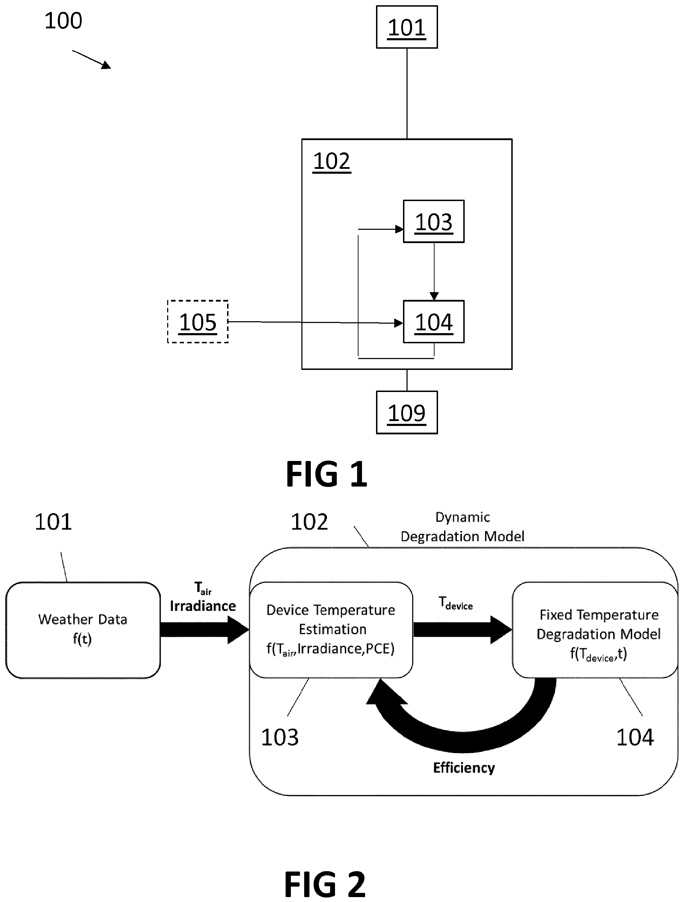

Referring to FIG 1, an exemplary method 100 for estimating the operational lifetime of a thin-film photovoltaic cell in accordance with embodiments of the present invention is shown. FIG 2 illustrates an exemplary method 100 in accordance with embodiments of the present invention in more detail.

The method 100 may be a method for estimating the operational lifetime of a photovoltaic system, e.g. a photovoltaic installation or a photovoltaic module. For example, the lifetime of a system comprising a plurality of thin-film photovoltaic cells may be estimated by estimating the evolution of the efficiency of each of the thin-film photovoltaic cells over time, and determining an estimated operational lifetime of the entire system or module taking the simulated efficiency of the component cells into account, e.g. by a straightforward consolidation of the component estimates and/or by a method known in the art. Alternatively, a method as described in detail hereinbelow can be extended in a straightforward manner, such that the steps of determining a device temperature based on an efficiency estimate and updating the efficiency estimate by estimating a degradation of the thin-film photovoltaic cell as function of the device temperature apply to a system (e.g. installation or module) comprising a plurality of photovoltaic cells, e.g. by determining a representative device temperature for the plurality of cells or by determining a device temperature for each of the plurality of cells and/or by updating an efficiency estimate for the system or by updating efficiency estimates for each of the cells.

The use of the wording 'efficiency' may refer specifically to the power conversion efficiency of a photovoltaic cell or system, e.g. of the thin-film photovoltaic cell, as known in the art.

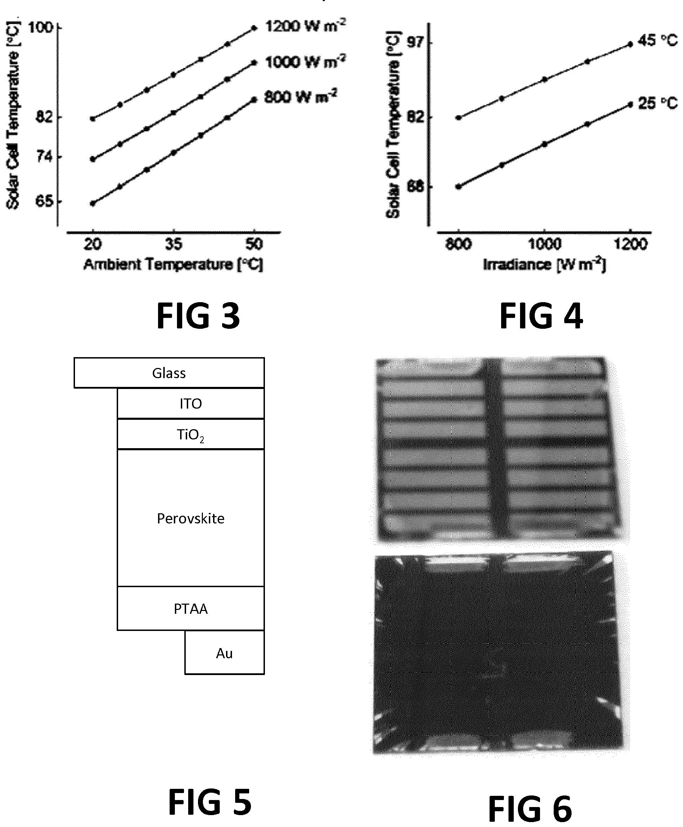

The method 100 may be a method for estimating the operational lifetime of a thin-film photovoltaic cell comprising an absorber layer that comprises a perovskite material, e.g. a perovskite solar cell (PSC). For example, such PSC device may have a structure comprising (e.g. consisting of) a stack of layers of glass, indium tin oxide (ITO), titanium dioxide ($TiO_2$), a perovskite absorber material such as methyl ammonium lead iodide (MAPI), poly[bis(4-phenyl)(2,4,6-trimethylphenyl)amine] (PTAA) and gold (Au), e.g. stacked in the order as mentioned. FIG 5 shows such an exemplary PSC device. Other examples of perovskite absorber materials may include other methyl ammonium lead trihalides (e.g. bromine or chlorine), formamidinum lead trihalides, caesium lead halides, tin-based materials such as $CH_3NH_3SnI_3$, transition metal oxide perovskites and heterostructures thereof, e.g. $LaVO_3/SrTiO_3$.

The method 100 comprises obtaining 101 a time series of data indicative of environmental conditions as dependent on time. For example, the time series may comprise weather data indicative of a temporal evolution of weather conditions, e.g. over a timespan of at least one year, e.g. over a timespan of a plurality of years, though a timespan of less than one year is not excluded in accordance with embodiments of the present invention. The temporal resolution of the time series may correspond to at least one sample point per year, preferably at least one sample point per month, or even at least one sample point per week, or even at least one sample point per hour. The time series may comprise, for each time index of the time series, a value indicative of the ambient temperature, e.g. an air temperature ($T_{air}$). The time series may comprise, for each time index of the time series, a value indicative of the irradiance on the photovoltaic cell. For example, such time series may be easily obtained from a historical weather data provider. Such data are generally available for many locations, e.g. providing air temperature and irradiance data in an hourly resolution.

The method 100 comprises estimating 102 the efficiency (PCE) of the thin-film photovoltaic cell at a plurality of points in time. Estimating 102 the efficiency may comprise calculating the efficiency as function of time using a dynamic degradation model of the thin-film photovoltaic cell. For example, for each point in time of the plurality of points in time, in chronological order, the step of determining 103 a device temperature followed by the step of updating 104 the efficiency estimate, as discussed in detail hereinbelow, may be performed.

For each point in time, estimating 102 the efficiency comprises determining 103 a device temperature based on an efficiency estimate and on data of the time series that are representative for that point in time. Thus, for each time step, the device temperature $T_{device}$ may be estimated. For example, for a first (i.e. earliest) point in time of the plurality of points in time, the efficiency estimate, PCE, may be the efficiency of the thin-film photovoltaic cell as manufactured and before use, e.g. as can be experimentally determined or estimated from design details. For other points in time of the plurality of points in time, the efficiency estimate Eff may be as obtained by the update 104 in a previous step executed for a preceding point in time of the plurality of points in time.

The device temperature $T_{device}$ may be calculated based on the air temperature $T_{air}$, the Irradiance and a current estimate of the efficiency PCE of the photovoltaic cell. For example, the following equation may be applied to estimate the device temperature:

$$T_{dev} = \left( T_{air}^4 + \frac{1 - PCE}{2\sigma_B} . Irradiance \right)^{\frac{1}{4}}$$

FIG 3 and FIG 4 show some exemplary curves of the device temperature as function of, respectively, the air temperature $T_{air}$ and the Irradiance.

Furthermore, determining 103 the device temperature may also take other data into account, e.g. additional environmental parameters as function of time included in the obtained 101 time series, such as a wind velocity and/or wind direction. Determining 103 the device temperature may also take at least one other parameter into account, such as thermal properties of a substrate of the photovoltaic cell, e.g. a thermal resistance and/or a thermal capacitance. For example, determining 103 the device temperature may comprise applying a thermal equivalent circuit model, as known in the art.

Estimating 102 the efficiency further comprises, for each point in time, updating 104 the efficiency estimate by estimating a degradation of the thin-film photovoltaic cell as function of the device temperature.

Updating 104 the efficiency estimate may comprise using a fixed temperature degradation model $f(T_{device}, t)$ to calculate a reduction of the efficiency of the photovoltaic cell during the considered period, e.g. over an interval representative of the difference in time between two consecutive points in time of the plurality of points in time. The efficiency estimate of the device is then updated for the next estimation of the device temperature $T_{device}$.

Advantageously, a fixed temperature degradation model, i.e. a model of degradation of the photovoltaic device when exposed for a time t to a constant device temperature $T_{device}$, can be easily derived experimentally or theoretically. However, embodiments of the present invention advantageously allow a simulation of degradation under non-constant, e.g. realistic, ambient conditions using a simple fixed temperature degradation model.

For example, the reduction of the efficiency of the photovoltaic cell may be estimated by calculating the time derivative of an equation that expresses the efficiency, e.g. the PCE, as function of the device temperature. For example, the equation may correspond to the fixed temperature degradation model. For example, the equation may be an injective approximation of the fixed temperature degradation model (e.g. which may be non-injective, due to, for example, a recovery process), such that the time derivative can be calculated as function of the efficiency and the device temperature.

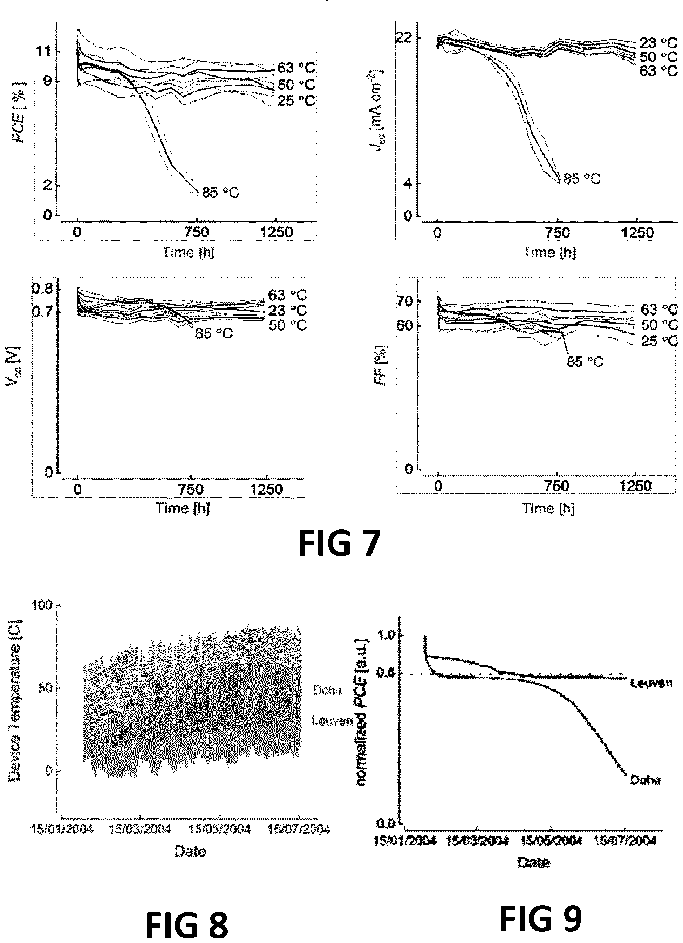

For example, FIG 2 schematically illustrates an exemplary method 100 in accordance with embodiments of the present invention. FIG 9 illustrates results of a calculation of the efficiency over time based on weather data of a location, in accordance with this exemplary method. In this example, time increment steps of 1h were used in the simulation. FIG 8 shows the corresponding results of the estimation of the device temperature at each time step, taking the meteorological data at that time index and the estimated efficiency of the device at that point in time into account. In this example, two simulations were performed, for respectively the locations Leuven (BE) and Doha (Qatar).

A method in accordance with embodiments of the present invention may comprise determining 105 parameters of a fixed temperature degradation model for use in the step of updating the efficiency estimate.

The fixed temperature degradation model may be determined (e.g. parameters of such model may be determined) by studying the progress of parameters of interest (e.g. efficiency or parameters related to efficiency) of the photovoltaic devices stored at constant temperatures.

In an example for illustrating such experimental determination of the fixed temperature degradation model, substrates with 12 perovskite solar cells were stored at constant temperatures of respectively 23°C, 50°C, 63°C and 85°C. FIG 5 shows schematically the layered structure of the exemplary perovskite solar cells, in which the perovskite material used in this example was Methyl Ammonium Lead Iodide (MAPI). FIG 6 shows, respectively from top to bottom, a photograph of the cells viewed from the side of the gold layer and a photograph of the cells viewed from the glass side.

This determining of parameters may comprise storing at least one thin-film photovoltaic cell, e.g. preferably a plurality of thin-film photovoltaic cells, at a constant and predetermined temperature, e.g. a plurality of the cells at a plurality of different temperatures. This determining of parameters may also comprise measuring and/or determining characteristics of the cells at a plurality of points in time during this storage at constant temperature, or alternatively, acquiring pre-measured and/or predetermined characteristics of the cells at the plurality of points in time during a pre-executed phase of storage at constant temperature and testing.

For example, the efficiency of the photovoltaic cell may be determined at a plurality of points in time during its storage at constant temperature. For example, a plurality of characteristics which influence or determine the efficiency may be measured or determined at a plurality of points in time during the storage of the cell at constant temperature. For example, such characteristics may include a short-circuit current density (Jsc), an open-circuit voltage (Voc) and/or a fill factor (FF).

Referring to the example introduced hereinabove, FIG 7 shows the evolution of these device parameters Jsc, Voc and FF, as well as the power conversion efficiency PCE, which can be obtained by multiplication of Jsc, Voc and FF, during storage at constant temperature, as can be experimentally determined.

The determining of parameters may also comprise fitting a parametric equation (or set of parametric equations) onto the characteristics of the cells that were acquired for a plurality of points in time during constant temperature storage and for a plurality of different temperatures.

Thus, degradation mechanisms associated with device parameters can be described by such function(s), e.g. by fitting appropriate parameter values, such as values of activation energy and attempt rate. These function(s) and fitted parameters can thus be used for updating the efficiency estimate.

The fixed temperature degradation model may comprise an equation for the power conversion efficiency (PCE), e.g. a normalized PCE, that comprises (or consists of) a multiplication of a factor (e.g. an equation) expressing the short-circuit current density Jsc, a factor (e.g. an equation) expressing the open-circuit voltage Voc and a factor (e.g. an equation) expressing the fill factor FF:

$$normalized\ PCE(t,T) =$$
$$normalized\ J_{sc}(t,T) \times normalized\ V_{oc}(t,T) \times normalized\ FF(t,T) ,$$

where T refers to the device temperature and t refers to time. A decrease of any of these characteristics, and hence a decrease of the efficiency, can be caused by one or more degradation mechanisms. Each degradation mechanism can be represented by an equation that models the behaviour of the degradation mechanism, e.g. for which equations some examples are provided hereinbelow. Since for each of the components Jsc, Voc and FF, multiple degradation mechanisms may apply, the equations for which can be additively combined, the multiplicative factors $A_0$ of these equations may be preferably scaled such as to sum to one.

The fixed temperature degradation model, e.g. the factor expressing the short-circuit current density Jsc and/or the factor expressing the open-circuit voltage Voc and/or the factor expressing the fill factor FF, may comprise one or more functions of the form $A_0 e^{-k \cdot tn}$ and/or one or more functions of the form $A_0[_1 - (k \cdot t)^n]$, in which the parameters $A_0$, k and n refer respectively to a multiplicative factor, a degradation rate and an exponent.

For the factor expressing the short-circuit current density Jsc, the expression form $A_0 e^{-k \cdot tn}$ may be particularly suitable for expressing the effect of nucleation and growth of a non-photo-active phase, e.g. as may be encountered in a perovskite or CIGS thin-film photovoltaic cell, for expressing the effect of a phase segregation of a photo-active bulk heterojunction with the formation of a non-photo-active phase, e.g. as may be encountered in an organic thin-film photovoltaic cell, and/or for expressing the effect of a degradation caused by a first order reaction, e.g. as may be encountered in a CIGS photovoltaic cell. The expression form $A_0[_1 - (k \cdot t)^n]$ may be particularly suitable, in the Jsc factor, for expressing the effect of phase segregation of a photo-active bulk heterojunction with formation of a non-photo-active phase, e.g. in an organic photovoltaic cell, and/or for expressing the effect of diffusion-controlled degradation of the photo-active phase, e.g. for a perovskite photovoltaic cell.

For the factor expressing the open-circuit voltage Voc, the expression form $A_0 e^{-k \cdot tn}$ may be particularly suitable for expressing the effect of degradation caused by a first order reaction, such as desorption, e.g. as may be encountered in a perovskite photovoltaic cell, and the expression form $A_0[_1 - (k \cdot t)^n]$ may be particularly suitable for expressing the effect of a diffusion-controlled degradation, e.g. for a CIGS photovoltaic cell.

The fixed temperature degradation model may comprise a function of the form $A_0 \cdot m \cdot v_t \cdot \ln(normalized J_{sc}(t))$, in which the parameters $A_0$ and m refer respectively to a multiplicative factor and an ideality factor of the device, in which $V_t$ to a thermal voltage and in which $normalized\ J_{sc}(t)$ refers to a suitable function for expressing the (normalized) short-circuit current density Jsc over time. This expression may be particularly suitable for expressing the effect of degradation caused by a decrease of the short-circuit current density Jsc.

For the factor expressing the fill factor FF, the expression form $A_0 e^{-k \cdot tn}$ may be particularly suitable for expressing the effect of diffusion-controlled degradation, e.g. caused by a change in morphology, e.g. as may be encountered in a perovskite or organic photovoltaic cell, and the expression form $A_0[_1 - (k \cdot t)^n]$ may be particularly suitable for expressing the effect of a diffusion-controlled degradation, e.g. for a CIGS photovoltaic cell.

The degradation rate parameters used in these equations may be expressed by the Arrhenius equation:

$$k = B_0 e^{E_a/k_B T}$$

where $B_0$ is the multiplicative factor, $E_a$ is the activation energy, $k_B$ is the Boltzmann constant and $T$ is the temperature in K. Thus, the dependency of the efficiency equation on temperature is introduced. Thermal testing at different temperatures, as discussed hereinabove, may be used to determine the appropriate activation energies of each degradation mechanism.

For example, for modelling the degradation of a perovskite solar cell, e.g. comprising a MAPI perovskite, the efficiency may be expressed as follows:

$$normalized\ PCE(t,T) =$$

$$normalized\ J_{sc}(t,T) \times normalized\ V_{oc}(t,T) \times normalized\ FF(t) =$$

$$e^{\left(-A_{JMAK} \times e^{\left(-\frac{E_{a,MAPI}}{k_B T}\right)} \times t^{n_{JMAK}}\right)} \times \left(\frac{V_{oc,\infty} + \Delta V_{oc,oxi} \times e^{\left(-A_{oxi} \times e^{\left(\frac{E_{a,oxi}}{k_B T}\right)} \times t\right)}}{V_{oc,t=0}} + \right.$$

$$\frac{\Delta V_{oc,PbI2} - \Delta V_{oc,PbI2} \times e^{\left(-k_{PbI2} \times \left(1 - e^{\left(A_{JMAK} \times e^{\left(-\frac{E_{a,MAPI}}{k_B T}\right)} \times t^{n_{JMAK}}\right)}\right)\right)}}{V_{oc,t=0}}$$

$$\left. + \frac{n \cdot V_t \cdot \left(A_{JMAK} \times e^{\left(-\frac{E_{a,MAPI}}{k_B T}\right)} \times t^{n_{JMAK}}\right)}{V_{oc,t=0}}\right)$$

$$\times \frac{FF_\infty + \Delta FF\, e^{(-k_{FF} \times t)}}{FF_{t=0}}$$

Where $V_{oc,t=0}$ and $FF_{t=0}$ refer to the normalization constants obtained by respectively the open-circuit voltage and fill factor at an initial time t=0, e.g. where the cell is assumed to have undergone no degradation yet. The parameters representing the activation energies $E_a$, exponents n, degradation rates k and factors A are sub-indexed by further identifiers to disambiguate these parameters in the combined equation.

The method 100 also comprises outputting 109 at least one value indicative of the operational lifetime based on the plurality of efficiency estimates obtained for the plurality of points in time. For example, the at least one value may comprise a list of efficiency estimates as function of time, e.g. a graph. For example, the at least value may comprise a time value obtained by interpolating the time as a function of the efficiency estimates to a predetermined efficiency threshold, e.g. to 80% of the initial efficiency.

In a method in accordance with embodiments of the present invention, the steps of obtaining 101 and of estimating 102 may be repeated for a plurality of time series that are indicative of environmental conditions as dependent on time for a corresponding plurality of locations. Thus, advantageously, the influence of location, and particularly of different environmental (e.g. weather) conditions on different locations, on the expected lifetime can be evaluated.

In a second aspect, the present invention relates to a computer-program product for performing a method in accordance with embodiments of the first aspect of the present invention when executed.

In a third aspect, the present invention relates to a device for estimating the operational lifetime of a thin-film photovoltaic cell. The device comprises an input for receiving a time series of data that are indicative of environmental conditions as dependent on time. The device comprises a processor for estimating the efficiency of the thin-film photovoltaic cell at a plurality of points in time. This estimation comprises, for each point of the points in time, determining a device temperature based on an efficiency estimate and on data of the time series that are representative for that point in time and updating the efficiency estimate by estimating a degradation of the thin-film photovoltaic cell as function of the device temperature. The device also comprises an output for outputting at least one value indicative of the operational lifetime based on the plurality of efficiency estimates obtained for the plurality of points in time.

The device, and particularly the processor, may be adapted for, e.g. programmed for, performing a method in accordance with embodiments of the first aspect of the present invention. Details of essential and/or optional features of such device in accordance with embodiments of the present invention will therefore be clear from the description provided hereinabove relating to embodiments of the first aspect of the present invention.

In an example illustrating embodiments of the present invention, a method for studying the temperature dependent stability of perovskite photovoltaic cells and for predicting the lifetime of perovskite photovoltaic cells under thermal stress is presented. The model parameters are determined from the measurement of the activation energies and attempt rates governing thermally-induced degradation. The separate analysis of all the parameters extracted from the current-voltage characteristics allows for the prediction of the device performance with high precision. An extrapolation of the device lifetime at various locations based on historical weather data illustrates the relation between the laboratory data and real-world applications.

For these types of cells, the loss in performance caused by light-soaking in typical dayand-night cycles may be recoverable, but the loss caused by thermal stress is likely not recoverable. For the case of methyl ammonium lead iodide (MAPI)-based devices, the degradation mechanisms are usually associated with either MAPI or the hole transport layer (HTL). The decomposition of MAPI happens through the breakdown of the organic cation, according to the reaction:

$$CH_3NH_3PbI_3(\text{s}) \rightarrow PbI_2(\text{s}) + CH_3NH_2(\text{g}) + HI(\text{g})$$

The activation energy of this decomposition reaction is reported to be 1.24-1.54 eV in nonreactive atmospheres.

The thermal degradation associated with the most common HTL, N2,N2,N2',N2',N7,N7,N7',N7' - octakis (4-methoxyphenyl) - 9, 9' - spirobi [9H - fluorene] - 2,2',7,7' - tetramine (spiro-MeOTAD), is related to the additives of the layer. Spiro-MeOTAD by itself has a glass transition temperature ($T_g$) of 124 °C, which should render this layer stable up to that temperature. However, the co-solvent 4-tert-Butylpyridine (tBP) is added to spiro-MeOTAD in order to increase the solubility of Bis(trifluoromethane)sulfonimide lithium salt (LiTFSI), the dopant of spiro-MeOTAD. This co-solvent is a plasticizer and reduces the $T_g$ of spiro-MeOTAD from 124 °C to 72 °C. Heating devices above the $T_g$ of spiro-MeOTAD leads to crystallization, which reduces the performance of the devices. Furthermore, voids are observed in spiro-MeOTAD layers with both LiTFSI and tBP that were heated at 120 °C, but not in spiro-MeOTAD layers with only one of the additives, or in neat films. Thus, thermal stress can cause multiple failure mechanisms on spiro-MeOTAD layers.

One alternative to spiro-MeOTAD is Poly [bis (4-phenyl) (2,4,6-trimethylphenyl) amine] (PTAA), a polymer a chemistry similar to spiro-MeOTAD. The $T_g$ of PTAA (94 °C) is lower than that of spiro-MeOTAD, but since PTAA requires a smaller amount of LiTFSI than spiro-MeOTAD, less tBP is added. Therefore, replacing spiro-MeOTAD by PTAA should increase the thermal stability of MAPI-based devices.

The already good understanding of the degradation mechanisms triggered by thermal stress in MAPI-based PSC can be integrated into models for the calculation of device lifetime.

The thermal stability of devices with the two different HTLs were compared spiro-MeOTAD and PTAA, to select the most stable device structure. The devices are produced on glass substrates with pre-patterned Indium Tin Oxide (ITO) as transparent electrode, $TiO_2$ as electron transport layer, methyl ammonium lead iodide (MAPI) as photo-active layer, a HTL and Au as reflective contact, resulting in the following structure: ITO / $TiO_2$ / MAPI / HTL / Au. Devices with the different HTLs are compared side-by-side by storing them in $N_2$, in the dark, at 85 °C in between measurements.

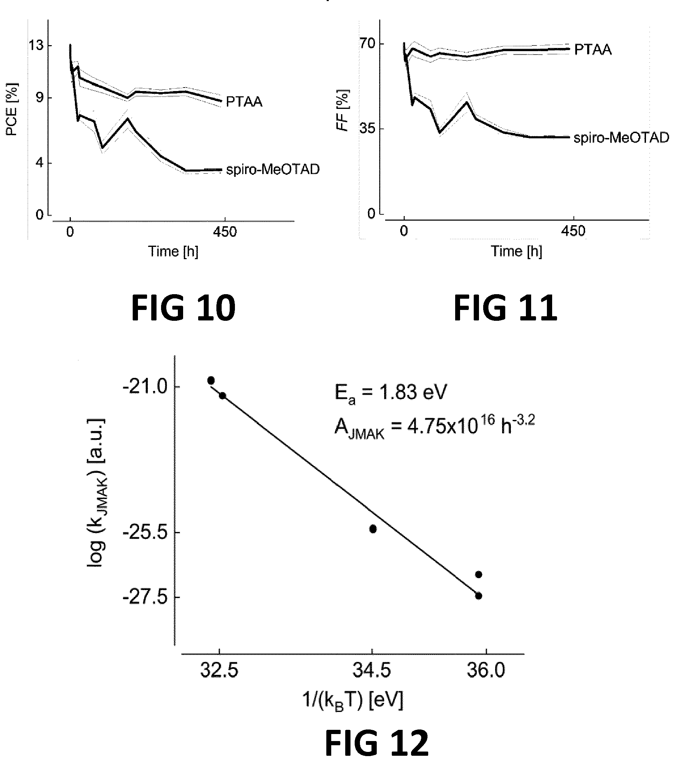

The *PCE* of devices with spiro-MeOTAD decreased faster than the *PCE* of devices with PTAA, see FIG 10. The cause for the faster *PCE* reduction of the devices with spiro-MeOTAD is the additional reduction of fill factor *(FF)* compared with the devices with PTAA, see FIG 11. The better thermal stability of devices with PTAA was expected due to the smaller amount of the plasticizer tBP added to spiro-MeOTAD. Therefore, the study of the intrinsic stability continues with the more thermally stable structure: ITO / $TiO_{2/}$ MAPI / PTAA / Au.

For a more detailed study, the devices were always stored in $N_2$, in the dark, and at constant temperatures: 23 °C, 50 °C, 63 °C or 85 °C, only removed from the heating plates for measurements at pre-determined times, as illustrated in FIG 7. Devices stored at temperatures up to 63 °C present minor losses of *PCE,* associated with reductions of the open-circuit voltage ($V_{oc}$) and *FF.* Devices stored at 85 °C present much larger losses of *PCE* that are related to a reduction of the short-circuit current density ($J_{sc}$). The causes for the performance reduction are analyzed in more detail in dedicated sections for each parameter.

The reduction of $J_{sc}$ in devices stored at 85 °C is accompanied by a color change in the sample, that becomes increasingly yellow with time, indicating that MAPI progressively degrades and leaving behind $PbI_2$. The colour change is quantified by a reduction in absorption of the devices in the range of MAPI (450-800 nm), and the absorption spectrum becomes more similar to that of devices with $PbI_2$ as the active layer (ITO / $TiO_2$ / $PbI_2$ / PTAA / Au). To better understand the chemical transformations of MAPI, ITO / $TiO_{2/}$ MAPI layer stacks are either stored at 23 °C or 100 °C for 100 hours in $N_2$, in the dark, and then measured by Time-of-Flight Secondary Ion Mass Spectroscopy (ToF-SIMS). The thermally stressed stacks have yellow coloration and have only traces of $CH_3NH_3$ signal ($CH_3NH_3^+$), in contrast to the reference pristine stack that has a strong $CH_3NH_3$ signal. Therefore, absorption and ToF-SIMS measurements confirm that the loss of $J_{sc}$ is caused by the loss of $CH_3NH_3$, the cation of MAPI.

To continue the study of $J_{sc}$ reduction, the $J_{sc}$ values are corrected for the power fluctuations of the solar simulator and normalized. The reduction of $J_{sc}$ is caused by the reduction of the charge-generating phase, i.e. the fraction of MAPI, because charge collection is barely affected (e.g. FIG 7 shows negligible *FF* losses even for devices at 85 °C). Therefore, the $J_{sc}$ can be directly related to the charge-generating phase, i.e. MAPI, by:

$$normalized\ J_{sc}(t) = \alpha(t) = 1 - \beta(t)$$

where $\alpha$ is the fraction of MAPI and $\beta$ is the fraction of $PbI_2$.

The $J_{sc}$ of the devices stored at 85 °C follows a sigmoidal shape, and provides an indication of the mechanism behind the degradation. Solid state reactions, like MAPI decomposition, can be described by a set of general functions of which two are sigmoidal: Johnson-Mehl-Avrami-Kolmogorov (JMAK) and Prout-Tompkins. The Prout-Tompkins function was developed to describe autocatalytic reactions, which is not the case of MAPI degradation, while the JMAK equation was developed to describe the nucleation and growth of a new phase, or material, from an original phase, which is in agreement with our observations. Therefore, the normalized $J_{sc}$ curves are fitted with the JMAK function:

$$normalized\ J_{sc}(t) = \alpha(t) = e^{\left(-k_{JMAK} \times t^{n_{JMAK}}\right)}$$

where $n_{JMAK}$ is the JMAK exponent, and $k_{JMAK}$ is the JMAK reaction rate. Unlike most reaction rates, the $k_{JMAK}$ is a complex rate constant of the $n^{th}$ order, hence the units $t^{-n}$. The higher reactional order of $k_{JMAK}$ incorporates both the nucleation and the growth reactions, which can themselves have an order higher than one. The $J_{sc}$ curves of devices tested at different temperatures are simultaneously fitted with a fixed $n_{JMAK}$. The lowest sum of residuals from the simultaneous fits, and therefore the best fit, is obtained with $n_{JMAK}$ = 3.2.

The activation energy ($E_{a,MAPI}$) and attempt rate ($A_{MAPI}$, with units $t^{-n}$) of the reaction can be extracted from the $k_{JMAK}$ at different temperatures, because they are related through the Arrhenius equation. From a plot of $1/(kBT)$ vs $\log(k_{JMAK})$, the $E_{a,MAPI}$ and $A_{JMAK}$ are extracted from the slope and intercept with the y axis, respectively, as shown in FIG 12. The degradation of the MAPI in devices has an $E_{a,MAPI}$ = 1.83 eV, and an $A_{JMAK}$ = 4.8 x $10^{16}$ $h^{-3.2}$. Thus, the $J$sc can be described over time as a function of the temperature:

$$normalized\ J_{sc}(t) = \alpha(t) = e^{\left(-A_{MAPI} \times e^{\left(\frac{E_{a,MAPI}}{k_B T}\right)} \times t^{n_{JMAK}}\right)}$$

The extracted data provides additional details about the degradation mechanism. Fractional $n_{JMAK}$ may be associated with either diffusion controlled growth, or distributions of sizes or shapes of reactant particles. The recipe used to produce the samples results in MAPI films composed of crystals with uniform shapes and sizes. Consequently, the reason for the fractional exponent could be the diffusion-controlled growth of $PbI_2$. This hypothesis is plausible because the degradation reaction of MAPI produces gaseous products that need to diffuse out for the reaction to proceed. Moreover, diffusion limitations could explain the additional 0.29-0.59 eV of activation energy required for the degradation of MAPI in the device compared with MAPI in vacuum or dispersed in an inert matrix.

More importantly, this function provides a reasonable description of the $J_{sc}$ over time and has two major implications: firstly, MAPI in devices does not have a temperature threshold for degradation, rather the degradation of MAPI happens progressively, according to the $E_{a,MAPI}$ and $A_{MAPI}$ values and depends on the thermal history of the device; secondly, the extracted $E_{a,MAPI}$ and $A_{MAPI}$ values imply that MAPI devices will degrade, even for mild operation conditions.

The evolution of the $V_{oc}$ for devices stored at 85°C is dictated by three mechanisms: the $V_{oc}$ first decreases in the initial hours, then increases, reaching a maximum at 350 hours, and then decreases again, see FIG 7. These behaviors indicate that thermal stress may cause two degradation mechanisms and one recovery mechanism that affect the $V_{oc}$.

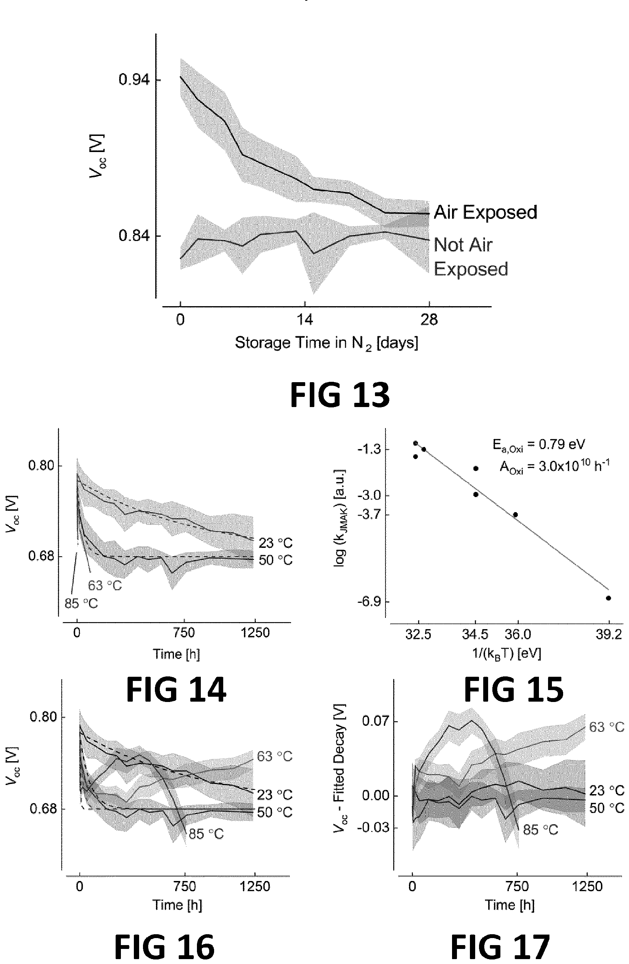

The initial $V_{oc}$ decrease may be related to the desorption of oxygen that passivates the MAPI during air-exposure of the device. A lower $V_{oc}$ in devices fabricated without air-exposure compared to $V_{oc}$ of air-exposed devices can be observed. The higher $V_{oc}$ is only related to the exposure of MAPI to air and not to the doping of spiro-MeOTAD, because devices in which the MAPI was exposed to air before HTL deposition have a $V_{oc}$ as high as devices with the standard recipe. These observations are in line with reports of oxygen quickly adsorbing into MAPI and passivating it. Therefore, the larger $V_{oc}$ of air-exposed devices may be due to passivation of MAPI by oxygen. Moreover, when the air-doped devices are stored in $N_2$ at room temperature, their $V_{oc}$ progressively decreases to the value of the devices that were not air-doped (see FIG 13). This progressive decrease of $V_{oc}$ suggests that oxygen desorbs from MAPI in an atmosphere with low oxygen partial pressures. Thus, to reflect this behaviour, the initial reduction of the $V_{oc}$ is fitted with an exponential function of the form:

$$V_{oc}(t) = V_{oc,\infty} + \Delta V_{oc,oxy} e^{-k_{Voc,oxy} \times t}\ \ [V]$$

where $V_{oc,\infty}$ is the asymptotic value, $\Delta V_{oc,oxy}$ the extra open-circuit voltage provided by oxygen passivation, and $k_{Voc,oxy}$ the rate of the exponential decay, see FIG 14. The activation energy ($E_{a,oxy}$) and attempt rate ($A_{oxy}$) for $V_{oc,oxy}$ decay are calculated from the rate constants, see FIG 15, like for $J_{sc}$. The $\Delta V_{oc,oxy}$ has $E_{a,oxy}$ = 0.79 eV and $A_{oxy}$ = 3.0×$10^{10}$

h$^{-1}$, see FIG 16. This activation energy closely matches the DFT (density functional theory) calculated value of 0.72 eV for the adsorption of oxygen on positively charged iodine vacancies on the {001} planes of MAPI. The adsorption of oxygen on positively charged iodine vacancies is a reasonable hypothesis, because MAPI is expected to spontaneously create positively charged iodine vacancies at room temperature in the dark. Moreover, adsorption of oxygen on iodine vacancies has also been suggested due to the similarity in size of the oxygen and the iodine. The additional energy compared to the DFT calculations can be related to the additional step of diffusion through the HTL and contact.

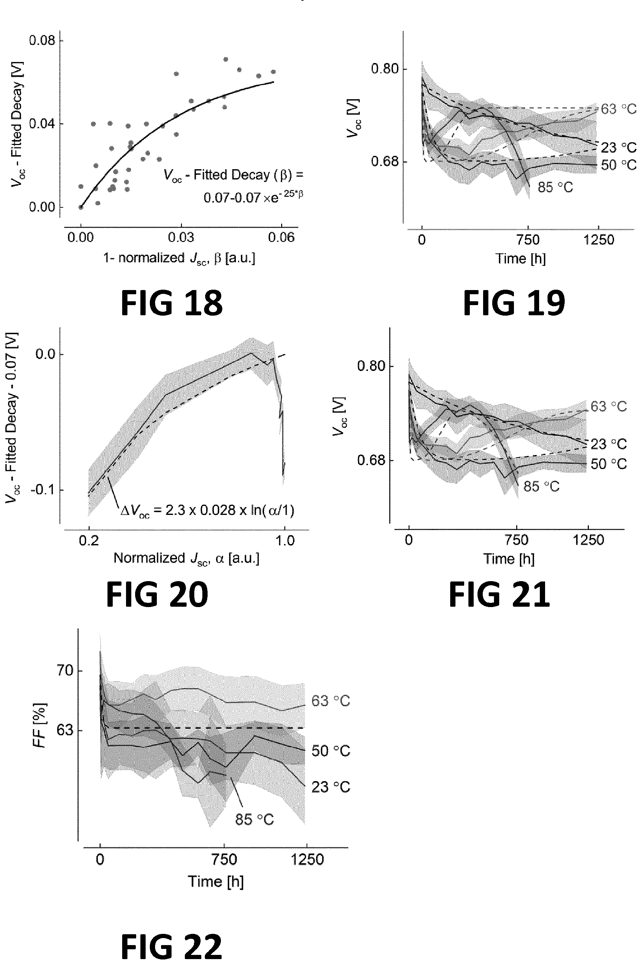

The fits associated with oxygen desorption are subsequently subtracted from the $V_{oc}$ curves to increase the visibility of the remaining trends, see FIG 17. The new curves evidence an increase of $V_{oc}$ for the devices stored at 63 °C and 85 °C. These are also the only storage temperatures at which the devices present a sizeable reduction of $J_{sc}$. Side-by-side comparison of the variation $V_{oc}$ and $J_{sc}$ shows that similar losses of $J_{sc}$ result in the similar gains of $V_{oc}$. These observations indicate that the increase in $V_{oc}$ is linked to the conversion of MAPI into PbI$_2$. Small amounts of PbI$_2$ have been suggested to passivate MAPI and other perovskites. An increase in $V_{oc}$ of 0.05-0.06 V was attributed to PbI$_2$ passivation in a reported study, very similar to the present 0.07 V increase that is observed for a 6% reduction of $J_{sc}$. Thus, the relation between the PbI$_2$ fraction ($\beta$ = 1-$\alpha$ = 1- normalized $J_{sc}$) and the $V_{oc}$ increase is parameterized with an exponential function, see FIG 18. This exponential function converges to 0.07 V ($V_{oc,PbI2}$) and has a decay constant ($k_{PbI2}$) of 25. The 'PbI$_2$ fraction', $\beta$, is substituted by the equation describing $J_{sc}$, according to $\beta$ = 1- normalized $J_{sc}$. This additional $V_{oc}$ component results in a more complete description of the $V_{oc}$ (see FIG 19).

Further conversion of MAPI into PbI$_2$ reduces the $V_{oc}$ of the devices because less carrier generation diminishes the quasi-Fermi level splitting, which determines the $V_{oc}$. The impact of decreased carrier generation is clear for samples stored at 85 °C, for which a $J_{sc}$ reduction larger than 6% (or a conversion of more than 6% of MAPI into PbI$_2$) results in a second reduction of $V_{oc}$. The relation between the loss of $J_{sc}$ and reduction of $V_{oc}$ is established by rearranging the photo-diode equation as a function of $V_{oc}$:

$$\Delta V_{OC,loss}\ (normalized\ J_{sc}) = n \cdot V_t \cdot \ln\left(\frac{normalized\ J_{sc}}{normalized\ J_{sc,initial}}\right)\ [V]$$

where n is the ideality factor of the diode, $V_t$ the thermal voltage, the $J_{sc}$ at a given time is given by the equation provided hereinabove, and normalized $J_{sc,initial}$, is 1. A good match with the data is achieved by including the corresponding values of n = 2.3, $V_t$ = 0.028 V (the equilibrium temperature in the solar simulator is 50 °C) (see FIG 20). This component is then added to the description of the $V_{oc}$ reduction. To be compatible with the description of the normalized $J_{sc}$, the full expression of $V_{oc}$ over time is normalized with $V_{oc,t=0}$, being the initial $V_{oc}$ value:

$$normalized\ V_{oc}(t,T) = (V_{oc,\infty} + \Delta V_{oc,oxi} \times e^{-A_{Voc,oxi} \times e^{\left(\frac{E_{a,oxi}}{k_B T}\right)} \times t} +$$
$$\Delta V_{oc,PbI2} - \Delta V_{oc,PbI2} \times e^{\left(-k_{PbI2} \times \left(1 - e^{\left(A_{MAPI} \times e^{\left(-\frac{E_{a,MAPI}}{k_B T}\right)} \times t^{n_{JMAK}}\right)}\right)\right)} -$$
$$n \times V_t \times \left(A_{MAPI} \times e^{\left(-\frac{E_{a,MAPI}}{k_B T}\right)} \times t^{n_{JMAK}}\right))/V_{oc,t=0}$$

The three mechanisms that impact $V_{oc}$ are thus explained and parametrized. The first decay of $V_{oc}$ of 0.10 V is due to desorption of oxygen from MAPI. Then a recovery of 0.07 V is observed when 6% of MAPI is converted into PbI$_2$, which passivates the remaining MAPI. A further loss of MAPI reduces the $J_{sc}$ and causes a loss of $V_{oc}$.

The fill factor FF of all devices presents a reduction of 10% that is mostly independent of the storage temperature of the devices. For temperatures below 85 °C the FF reduction happens in the initial 10 hours and saturates, while for the devices at 85 °C the reduction happens in two stages and appears to stabilize. An approximate description of the progress of the FF of the devices at different temperatures is obtained by the fit with an exponential decay, where $FF_{\infty}$ is the asymptotic value of FF, $\Delta FF$ is the excess of FF and $k_{FF}$ is the decay rate. The average of the extracted values is: $FF_{\infty}$ = 63.3, $\Delta FF$ = 6.2 and $k_{FF}$ =0.1 h$^{-1}$(FIG 22). Again, for compatibility, the FF is normalizd by the initial value, $FF_{t=0}$:

$$normalized\ FF(t) = \left(FF_{\infty} + \Delta FF e^{(-k_{FF} \times t)}\right)/FF_{t=0}$$

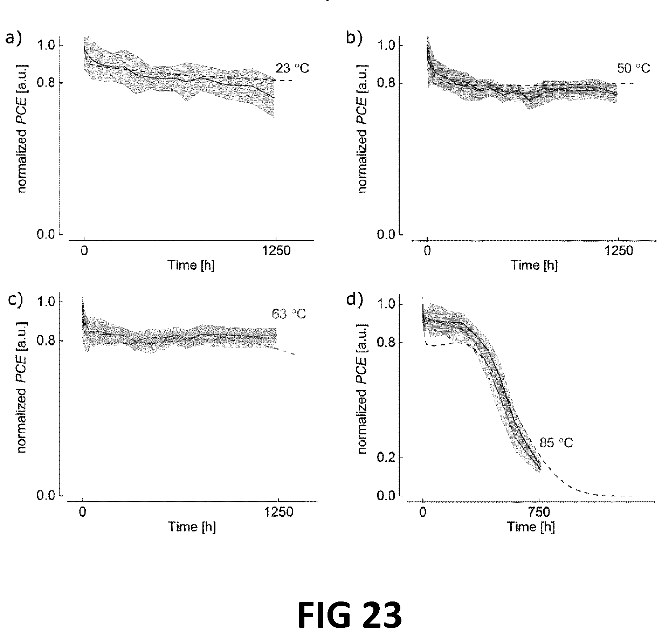

The normalized PCE can be obtained through the product of the normalized device parameters $J_{sc}$, $V_{oc}$ and *FF,* based on the equations derived hereinabove. This product equation agrees qualitatively and quantitively with the measured values, mostly falling within the experimental error. Therefore, the equation can be utilized to estimate the lifetime (here defined at the time to reach 80% of the initial efficiency, $t_{80}$) of a device at a fixed temperature. The $t_{80}$ can be calculated graphically and the graphs in FIG 23 illustrate that $t_{80}$ is reached within 1000 hours at all storage temperatures. Interestingly, the fast initial *PCE* loss is due to the quick decays of the *FF* and $V_{oc}$, although the largest losses in the long term are caused by the $J_{sc}$ reduction. If this initial *FF* and $V_{oc}$ burn-in are disregarded, the devices are stable for more than 1000 hours at temperatures up to 63 °C.

## Claims

1. A method (100) for estimating the operational lifetime of a thin-film photovoltaic cell, the method comprising:

   - obtaining (101) a time series of data which are indicative of environmental conditions as dependent on time,
   - estimating (102) the efficiency of the thin-film photovoltaic cell at a plurality of points in time, wherein said estimating comprises, for each point of said points in time, determining (103) a device temperature based on an efficiency estimate and on data of the time series that are representative for that point in time and updating (104) the efficiency estimate by estimating a degradation of the thin-film photovoltaic cell as function of the device temperature, and
   - outputting (109) at least one value indicative of the operational lifetime based on the plurality of efficiency estimates obtained for the plurality of points in time.

2. The method of claim 1, wherein said step of updating (104) said efficiency estimate comprises using an equation $f(T_{device},t)$ that expresses the efficiency of the photovoltaic cell over a time t and at a constant device temperature $T_{device}$ in accordance with a fixed temperature degradation model.

3. The method of claim 2, wherein said equation is an equation for the power conversion efficiency, or a normalized power conversion efficiency, that comprises a multiplication of a factor expressing the short-circuit current density, a factor expressing the open-circuit voltage and a factor expressing the fill factor.

4. The method of claim 3, wherein at least one of said factor expressing the short-circuit current density, said factor expressing the open-circuit voltage and said factor expressing the fill factor comprises a function of the form $A_0 e^{-k \cdot tn}$ and/or a function of the form $A_0[1- (k \cdot t)^n]$ and/or a sum of a plurality of such functions of the form $A_0 e^{-k \cdot tn}$ and/or $A_0[1- (k \cdot t)^n]$, wherein $A_0$, $k$ and n represent respectively a multiplicative factor, a degradation rate and an exponent.

5. The method of claim 4, wherein said degradation rate is dependent on the device temperature in accordance with the Arrhenius equation $k = B_0 e^{E_a/k_B T}$, wherein $B_0$ represents a multiplicative factor, $E_a$ represents an activation energy, $K_B$ is the Boltzmann constant and T represents the device temperature.

6. The method of claim 5, wherein said factor expressing the short-circuit current density comprises a function of the form $A_0 e^{-k \cdot tn}$, wherein said factor expressing the open-circuit voltage comprises a sum of two functions of the form $A_0 e^{-k \cdot tn}$ and one function of the form of the $A_0[1- (k \cdot t)^n]$, and wherein said factor expressing the fill factor comprises a function of the form $A_0 e^{-k \cdot tn}$.

7. The method of any of the claims 2 to 6, furthermore comprising determining (105) parameters of said equation for use in the step of updating (104) said efficiency estimate, in which said step of determining (105) said parameters comprises storing a plurality of said thin-film photovoltaic cells at a plurality of constant and predetermined temperatures and measuring and/or determining characteristics of said plurality of photovoltaic cells at a plurality of points in time during their storage at constant temperature.

8. The method of claim 7, wherein said measured and/or determined characteristics comprise a short-circuit current density, an open-circuit voltage and/or a fill factor.

9. The method of any of the previous claims, wherein said method is adapted for estimating the operational lifetime of a thin-film photovoltaic cell comprising a absorber layer that comprises a perovskite material.

10. The method of claim 9, wherein said perovskite material comprises methyl ammonium lead iodide.

**11.** The method of claim 10, wherein obtaining said time series comprises obtaining weather data indicative of a temporal evolution of weather conditions, wherein said time series comprises, for each time index of the time series, at least a value indicative of an ambient air temperature and a value indicative of an insolation.

**12.** The method of claim 11, wherein determining (103) said device temperature comprises calculating the device temperature based on an air temperature, an insolation and the current estimate of the efficiency.

**13.** The method of any of the previous claims, wherein said steps of obtaining (101) and estimating (102) are repeated for a plurality of time series that are indicative of environmental conditions as dependent on time for a corresponding plurality of locations.

**14.** A computer-program product for performing the method of any of the previous claims when executed.

**15.** A device for estimating the operational lifetime of a thin-film photovoltaic cell, the device comprising an input for receiving a time series of data that are indicative of environmental conditions as dependent on time, a processor for estimating the efficiency of the thin-film photovoltaic cell at a plurality of points in time and an output for outputting at least one value indicative of the operational lifetime based on the plurality of efficiency estimates obtained for the plurality of points in time, **characterised in that** said estimation comprises, for each point of the points in time, determining a device temperature based on an efficiency estimate and on data of the time series that are representative for that point in time and updating the efficiency estimate by estimating a degradation of the thin-film photovoltaic cell as function of the device temperature.

## Patentansprüche

**1.** Ein Verfahren (100) zur Schätzung der Betriebslebensdauer einer Dünnschicht-Fotovoltaikzelle, wobei das Verfahren umfasst:

- Erhalten (101) einer Zeitreihe von Daten, welche die Umgebungsbedingungen in Abhängigkeit von der Zeit anzeigen,
- Schätzen (102) des Wirkungsgrades der Dünnschicht-Fotovoltaikzelle zu einer Vielzahl von Zeitpunkten, wobei das Schätzen für jeden Punkt der Zeitpunkte das Bestimmen (103) einer Vorrichtungstemperatur auf der Grundlage einer Wirkungsgradschätzung und von Daten der Zeitreihe, die für diesen Zeitpunkt repräsentativ sind, und das Aktualisieren (104) der Wirkungsgradschätzung durch Schätzen einer Degradation der Dünnschicht-Fotovoltaikzelle als Funktion der Vorrichtungstemperatur umfasst, und
- Ausgeben (109) mindestens eines Wertes, der die Betriebslebensdauer anzeigt, auf der Grundlage der Vielzahl von Wirkungsgradschätzungen, die für die Vielzahl von Zeitpunkten erhalten wurden.

**2.** Das Verfahren nach Anspruch 1, wobei der Schritt des Aktualisierens (104) der Wirkungsgradschätzung die Verwendung einer Gleichung $f(T_{vorrichtung}, t)$ umfasst, die den Wirkungsgrad der fotovoltaischen Zelle über eine Zeit $t$ und bei einer konstanten Vorrichtungstemperatur $T_{vorrichtung}$ in Übereinstimmung mit einem festen Temperaturdegradationsmodell ausdrückt.

**3.** Das Verfahren nach Anspruch 2, wobei die Gleichung eine Gleichung für den Leistungsumwandlungswirkungsgrad oder einen normalisierten Leistungsumwandlungswirkungsgrad ist, der eine Multiplikation eines Faktors, der die Kurzschlussstromdichte ausdrückt, eines Faktors, der die Leerlaufspannung ausdrückt, und eines Faktors, der den Füllfaktor ausdrückt, umfasst.

**4.** Das Verfahren nach Anspruch 3, wobei mindestens einer des Faktors, der die Kurzschlussstromdichte ausdrückt, des Faktors, der die Leerlaufspannung ausdrückt, und des Faktors, der den Füllfaktor ausdrückt, eine Funktion der Formel $A_0 e^{-k \cdot tn}$ und/oder eine Funktion der Formel $A_0[1-(k \cdot t)^n]$ und/oder eine Summe aus einer Vielzahl solcher Funktionen der Formel $A_0 e^{-k \cdot tn}$ und/oder $A_0[1-(k \cdot t)^n]$ umfasst, wobei $A_0$, $k$ und $n$ jeweils einen multiplikativen Faktor, eine Degradationsrate und einen Exponenten darstellen.

**5.** Das Verfahren nach Anspruch 4, wobei die Degradationsrate von der Vorrichtungstemperatur gemäß der Arrhenius-Gleichung $k = B_0 e^{E_a/k_B T}$ abhängig ist, wobei $B_0$ einen multiplikativen Faktor darstellt, $E_a$ eine Aktivierungsenergie darstellt, $K_B$ die Boltzmann-Konstante ist und $T$ die Vorrichtungstemperatur darstellt.

**6.** Das Verfahren nach Anspruch 5, wobei der die Kurzschlussstromdichte ausdrückende Faktor eine Funktion der Formel $A_0 e^{-k \cdot tn}$ umfasst, wobei der die Leerlaufspannung ausdrückende Faktor eine Summe aus zwei Funktionen der Formel $A_0 e^{-k \cdot tn}$ und einer Funktion der Formel $A_0[1-(k \cdot t)^n]$ umfasst, und wobei der den Füllfaktor ausdrückende Faktor eine Funktion der Formel $A_0 e^{-k \cdot tn}$ umfasst.

**7.** Das Verfahren nach einem der Ansprüche 2 bis 6, weiter umfassend das Bestimmen (105) von Parametern der Gleichung zur Verwendung in dem Schritt des Aktualisierens (104) der Wirkungsgradschätzung, wobei der Schritt des Bestimmens (105) der Parameter das Speichern einer Vielzahl der Dünnschicht-Fotovoltaikzellen bei einer Vielzahl von konstanten und vorbestimmten Temperaturen und das Messen und/oder Bestimmen von Eigenschaften der Vielzahl von Fotovoltaikzellen zu einer Vielzahl von Zeitpunkten während ihrer Speicherung bei konstanter Temperatur umfasst.

**8.** Das Verfahren nach Anspruch 7, wobei die gemessenen und/oder bestimmten Eigenschaften eine Kurzschlussstromdichte, eine Leerlaufspannung und/oder einen Füllfaktor umfassen.

**9.** Verfahren nach einem der vorstehenden Ansprüche, wobei das Verfahren zur Schätzung der Betriebslebensdauer einer Dünnschicht-Fotovoltaikzelle angepasst ist, die eine Absorberschicht umfasst, die ein Perowskit-Material umfasst.

**10.** Verfahren nach Anspruch 9, wobei das Perowskit-Material Methylammonium-Bleiiodid umfasst.

**11.** Verfahren nach Anspruch 10, wobei das Erhalten der Zeitreihe das Erhalten von Wetterdaten umfasst, die eine zeitliche Entwicklung von Wetterbedingungen anzeigen, wobei die Zeitreihe für jeden Zeitindex der Zeitreihe mindestens einen Wert, der eine Umgebungslufttemperatur anzeigt und einen Wert, der eine Sonneneinstrahlung anzeigt, umfasst.

**12.** Verfahren nach Anspruch 11, wobei das Bestimmen (103) der Vorrichtungstemperatur das Berechnen der Vorrichtungstemperatur auf der Grundlage einer Lufttemperatur, einer Sonneneinstrahlung und der aktuellen Schätzung des Wirkungsgrads umfasst.

**13.** Verfahren nach einem der vorstehenden Ansprüche, wobei die Schritte des Erhaltens (101) und des Schätzens (102) für eine Vielzahl von Zeitreihen wiederholt werden, welche die Umgebungsbedingungen in Abhängigkeit von der Zeit für eine entsprechende Vielzahl von Orten anzeigen.

**14.** Computerprogrammprodukt zur Durchführung des Verfahrens nach einem der vorstehenden Ansprüche, wenn es ausgeführt wird.

**15.** Vorrichtung zur Schätzung der Betriebslebensdauer einer Dünnschicht-Fotovoltaikzelle, wobei die Vorrichtung eine Eingabe zum Empfangen einer Zeitreihe von Daten, welche die Umgebungsbedingungen in Abhängigkeit von der Zeit anzeigen, einen Prozessor zum Schätzen des Wirkungsgrades der Dünnschicht-Fotovoltaikzelle zu einer Vielzahl von Zeitpunkten und eine Ausgabe zum Ausgeben mindestens eines Wertes, der die Betriebslebensdauer auf der Grundlage der Vielzahl von Wirkungsgradschätzungen, die für die Vielzahl von Zeitpunkten erhalten wurden, anzeigt, umfasst, **dadurch gekennzeichnet, dass** die Schätzung für jeden Punkt der Zeitpunkte das Bestimmen einer Vorrichtungstemperatur auf der Grundlage einer Wirkungsgradschätzung und auf Daten der Zeitreihe, die für diesen Zeitpunkt repräsentativ sind, und das Aktualisieren der Wirkungsgradschätzung durch Schätzen einer Degradation der Dünnschicht-Fotovoltaikzelle als Funktion der Vorrichtungstemperatur umfasst.

**Revendications**

**1.** Un procédé (100) pour estimer la durée de vie opérationnelle d'une cellule photovoltaïque à couches minces, le procédé comprenant :

- l'obtention (101) d'une série chronologique de données qui indiquent des conditions environnementales en fonction du temps,
- l'estimation (102) de l'efficacité de la cellule photovoltaïque à couches minces à une pluralité de moments dans le temps, dans lequel ladite estimation comprend, pour chaque moment desdits moments dans le temps, la détermination (103) d'une température de dispositif sur la base d'une estimation d'efficacité et de données de la série chronologique qui sont représentatives de ce moment dans le temps et la mise à jour (104) de l'estimation d'efficacité en estimant une dégradation de la cellule photovoltaïque à couches minces en fonction de la température de dispositif, et

- la sortie (109) d'au moins une valeur indiquant la durée de vie opérationnelle sur la base de la pluralité d'estimations d'efficacité obtenues pour la pluralité de moments dans le temps.

2. Le procédé selon la revendication 1, dans lequel ladite étape de mise à jour (104) de ladite estimation d'efficacité comprend l'utilisation d'une équation f ($T_{dispositif}$, t) qui exprime l'efficacité de la cellule photovoltaïque au fil du temps t et à une température de dispositif constante $T_{dispositif}$ selon un modèle de dégradation de température fixe.

3. Le procédé selon la revendication 2, dans lequel ladite équation est une équation pour l'efficacité de conversion d'énergie, ou une efficacité de conversion d'énergie normalisée, qui comprend une multiplication d'un facteur exprimant la densité de courant de court-circuit, d'un facteur exprimant la tension en circuit ouvert et d'un facteur exprimant le facteur de remplissage.

4. Le procédé selon la revendication 3, dans lequel au moins un dudit facteur exprimant la densité de courant de court-circuit, dudit facteur exprimant la tension en circuit ouvert et dudit facteur exprimant le facteur de remplissage comprend une fonction de la forme $A_0 e^{-k \cdot t^n}$ et/ou une fonction de la forme $A_0[1- (k.t)^n]$ et/ou une somme d'une pluralité de telles fonctions de la forme $A_0^{-k \cdot t^n}$ et/ou $A_0 [1- (k \cdot t)^n]$, dans lequel $A_0$, $k$ et n représentent respectivement un facteur multiplicateur, un taux de dégradation et un exposant.

5. Le procédé selon la revendication 4, dans lequel ledit taux de dégradation dépend de la température de dispositif selon l'équation d'Arrhenius $k = B_0 e^{E_a/k_B T}$, dans lequel $B_0$ représente un facteur multiplicateur, $Ea$ représente une énergie d'activation, est la constante de Boltzmann et T représente la température de dispositif.

6. Le procédé selon la revendication 5, dans lequel ledit facteur exprimant la densité de courant de court-circuit comprend une fonction de la forme $A_0 e^{-k \cdot t^n}$, dans lequel ledit facteur exprimant la tension en circuit ouvert comprend une somme de deux fonctions de la forme $A_0 e^{-k \cdot t^n}$ et d'une fonction de la forme de $A_0[1- (k \cdot t)^n]$, et dans lequel ledit facteur exprimant le facteur de remplissage comprend une fonction de la forme $A_0 e^{-k \cdot t^n}$.

7. Le procédé selon l'une quelconque des revendications 2 à 6, comprenant en outre la détermination (105) de paramètres de ladite équation destinés à être utilisée à l'étape de mise à jour (104) de ladite estimation d'efficacité, dans lequel ladite étape de détermination (105) desdits paramètres comprend le stockage d'une pluralité desdites cellules photovoltaïques à couches minces à une pluralité de températures constantes et prédéterminées et la mesure et/ou la détermination de caractéristiques de ladite pluralité de cellules photovoltaïques à une pluralité de moments dans le temps pendant leur stockage à une température constante.

8. Le procédé selon la revendication 7, dans lequel lesdites caractéristiques mesurées et/ou déterminées comprennent une densité de courant de court-circuit, une tension en circuit ouvert et/ou un facteur de remplissage.

9. Le procédé selon l'une quelconque des revendications précédentes, dans lequel ledit procédé est conçu pour estimer la durée de vie opérationnelle d'une cellule photovoltaïque à couches minces comprenant une couche d'absorbeur qui comprend un matériau pérovskite.

10. Le procédé selon la revendication 9, dans lequel ledit matériau pérovskite comprend de l'iodure de plomb méthyl-ammonium.

11. Le procédé selon la revendication 10, dans lequel l'obtention de ladite série chronologique comprend l'obtention de données météorologiques indiquant une évolution temporelle de conditions météorologiques, dans lequel ladite série chronologique comprend, pour chaque indice de temps de la série chronologique, au moins une valeur indiquant une température d'air ambiant et une valeur indiquant une insolation.

12. Le procédé selon la revendication 11, dans lequel la détermination (103) de ladite température de dispositif comprend le calcul de la température de dispositif sur la base d'une température d'air, d'une insolation et de l'estimation actuelle de l'efficacité.

13. Le procédé selon l'une quelconque des revendications précédentes, dans lequel lesdites étapes d'obtention (101) et d'estimation (102) sont répétées pour une pluralité de séries chronologiques qui indiquent des conditions environnementales en fonction du temps pour une pluralité correspondante d'emplacements.

14. Un produit-programme d'ordinateur pour réaliser le procédé selon l'une quelconque des revendications précédentes.

15. Un dispositif pour estimer la durée de vie opérationnelle d'une cellule photovoltaïque à couches minces, le dispositif comprenant une entrée pour recevoir une série chronologique de données qui indiquent des conditions environnementales en fonction du temps, un processeur pour estimer l'efficacité de la cellule photovoltaïque à couches minces à une pluralité de moments dans le temps et une sortie pour sortir au moins une valeur indiquant la durée de vie opérationnelle sur la base de la pluralité d'estimations d'efficacité obtenues pour la pluralité de moments dans le temps,

**caractérisé en ce que**

ladite estimation comprend, pour chaque moment des moments dans le temps, la détermination d'une température de dispositif sur la base d'une estimation d'efficacité et de données de la série chronologique qui sont représentatives de ce moment dans le temps et la mise à jour de l'estimation d'efficacité en estimant une dégradation de la cellule photovoltaïque à couches minces en fonction de la température de dispositif.

100

101

102

103

105

104

109

# FIG 1

101

102

Dynamic
Degradation Model

Weather Data
f(t)

$T_{air}$
Irradiance

Device Temperature
Estimation
f($T_{air}$,Irradiance,PCE)

$T_{device}$

Fixed Temperature
Degradation Model
f($T_{device}$,t)

103

Efficiency

104

# FIG 2

**FIG 3**

**FIG 4**

**FIG 5**

**FIG 6**

**FIG 7**

**FIG 8**

**FIG 9**

**FIG 10**

**FIG 11**

$E_a = 1.83$ eV

$A_{JMAK} = 4.75 \times 10^{16}$ h$^{-3.2}$

**FIG 12**

**FIG 13**

**FIG 14**

**FIG 15**

**FIG 16**

**FIG 17**

**FIG 18**

$V_{oc}$ - Fitted Decay ($\beta$) =
$0.07-0.07 \times e^{-25 \cdot \beta}$

**FIG 19**

**FIG 20**

$\Delta V_{oc} = 2.3 \times 0.028 \times \ln(\alpha/1)$

**FIG 21**

**FIG 22**

**FIG 23**

**REFERENCES CITED IN THE DESCRIPTION**

**Patent documents cited in the description**

- US 2010224227 A1